# EUROPEAN PATENT APPLICATION

(11) **EP 4 796 351 A1**
(43) Date of publication of application: **26.08.2026**
(21) Application number: 24883898.9
(22) Date of filing: 29.05.2024
(51) Int. Cl.: B60H 1/00

(54) **THERMAL MANAGEMENT SYSTEM FOR VEHICLE, AND VEHICLE**

(30) Priority: 02.11.2023 CN 202311453060
(71) Applicant: Contemporary Amperex Intelligence Technology (Shanghai) Limited, Shanghai 201306 (CN)
(72) Inventor: LIU, Denghui, Shanghai 201306 (CN); ZHAO, Yu, Shanghai 201306 (CN); LIU, Yu, Shanghai 201306 (CN)
(74) Representative: Gong, Jinping
(86) International application number: PCT/CN2024/095972
(87) International publication number: WO 2025/091886

(57) **Abstract**

A thermal management system (100) for a vehicle, the system comprising: a first heat exchange branch (10) for adjusting the temperature in an occupant compartment; a second heat exchange branch (20) for performing heat exchange with a battery; and a heating flow path (31) and a heating element (32) for heating the heating flow path (31), wherein the heating flow path (31) is selectively in communication with at least one of the first heat exchange branch (10) and the second heat exchange branch (20). The thermal management system for a vehicle has low cost and is highly robust, and facilitates an improvement in the comfort of the occupant compartment. In addition, the present application further relates to a vehicle having the thermal management system (100).

## Description

### CROSS-REFERENCE TO RELATED APPLICATIONS

This application is based on and claims priority to the Chinese Patent Application No. 202311453060.4, filed on November 02, 2023, which is incorporated herein by reference in its entirety.

### TECHNICAL FIELD

This application relates to the field of vehicles, and specifically, to a thermal management system for a vehicle and a vehicle having the thermal management system for a vehicle.

### BACKGROUND

In the related art, in a thermal management architecture of a vehicle, when a PTC heater is arranged on a low-temperature water side, the PTC heater cannot directly heat a passenger compartment, and when the PTC heater is arranged on a high-temperature water side, the PTC heater cannot directly heat a battery. For a thermal management system architecture where the PTC heater is arranged on the high-temperature water side, the required power of the PTC heater is high, and the costs of system components are high. For a thermal management system architecture where the PTC heater is arranged on the low-temperature water side, although the power of the PTC heater can be reduced, the entire thermal management system has excess heat during low-load heating of the passenger compartment, and an operation mode of the thermal management system needs to be adjusted frequently. This causes large fluctuations in the air outlet temperature of an air conditioner, reducing the comfort of the passenger compartment. In addition, this increases the control difficulty of the thermal management system, reducing the robustness of the thermal management system.

### SUMMARY

This application aims to solve at least one of the technical problems in the related art to a certain extent.

To this end, this application provides a thermal management system for a vehicle. The thermal management system for a vehicle has low cost and high robustness, and helps to improve the comfort of a passenger compartment.

According to a first aspect, an embodiment of this application provides a thermal management system for a vehicle, including:
a first heat exchange branch configured to regulate a temperature of a passenger compartment;
a second heat exchange branch configured to exchange heat with a battery; and
a heating assembly, where the heating assembly includes a heating flow path and a heating element configured to heat the heating flow path, and the heating flow path is selectively in communication with at least one of the first heat exchange branch and the second heat exchange branch to guide a heated heat exchange medium to the first heat exchange branch and/or the second heat exchange branch.

In the above technical solution, through the thermal management system of this application, the heating flow path may be in communication with the first heat exchange branch and/or the second heat exchange branch, thereby allowing the heating element to be directly configured to regulate the temperature of the passenger compartment and/or regulate the temperature of the battery. Compared with the prior art, this helps to reduce the power of the heating element to reduce the costs of components of the thermal management system. In addition, an operation mode of the thermal management system does not need to be adjusted frequently, so that fluctuations in the air outlet temperature of an air conditioner can be reduced, thereby helping to improve the comfort of the passenger compartment. Moreover, the control difficulty of the thermal management system can be reduced, thereby helping to improve the robustness of the thermal management system.

According to a second aspect, an embodiment of this application further provides a vehicle including the above thermal management system for a vehicle.

Additional aspects and advantages of this application will be given in part in the following description, part of which will become apparent from the following description or be learned from the practice of this application.

### BRIEF DESCRIPTION OF DRAWINGS

FIG. 1 is a schematic diagram of a first operation mode of a thermal management system according to an embodiment of this application;
FIG. 2 is a schematic diagram of a second operation mode of a thermal management system according to an embodiment of this application;
FIG. 3 is a schematic diagram of a third operation mode of a thermal management system according to an embodiment of this application;
FIG. 4 is a schematic diagram of a fourth operation mode of a thermal management system according to an embodiment of this application;
FIG. 5 is a schematic diagram of a fifth operation mode of a thermal management system according to an embodiment of this application;
FIG. 6 is a schematic diagram of a sixth operation mode of a thermal management system according to an embodiment of this application; and
FIG. 7 is a schematic diagram of a seventh operation mode of a thermal management system according to an embodiment of this application.

The reference signs in the specification are as follows:
energy storage box 100;
thermal management system 100;
first heat exchange branch 10; heat exchange core 101; seventh end 102; eighth end 103;
second heat exchange branch 20; battery 201; third end 202; fourth end 203;
heating assembly 30; heating flow path 31; fifth end 311; sixth end 312; heating element 32; third pump 33;
first heat exchanger 40; first flow sub-passage 41; first end 411; second end 412; second flow sub-passage 42;
second heat exchanger 50; third flow sub-passage 51; fourth flow sub-passage 52; refrigeration flow path 53; compressor 531; first expansion valve 532; evaporator 533; second sub-branch 534; third sub-branch 535; second expansion valve 54; first circulation loop 55; liquid storage apparatus 56; first sub-branch 57;
third heat exchange branch 60; first pump 61; one-way valve 62; second circulation loop 63;
heat dissipation branch 70; ninth end 701; tenth end 702; electric drive system 71; second pump 72; radiator 73; air blower 731; first circulation flow path 74; second circulation flow path 75; communication branch 76; eleventh end 761; twelfth end 762; third circulation flow path 77;
first six-way valve 80; first connection end 801; second connection end 802; third connection end 803; fourth connection end 804; fifth connection end 805; sixth connection end 806; second six-way valve 81; seventh connection end 811; eighth connection end 812; ninth connection end 813; tenth connection end 814; eleventh connection end 815; and twelfth connection end 816.

### DESCRIPTION OF EMBODIMENTS

To make the objectives, technical solutions, and advantages of the embodiments of this application clearer, the technical solutions in the embodiments of this application will be clearly described below with reference to the accompanying drawings in the embodiments of this application. Apparently, the described embodiments are only some rather than all of the embodiments of this application. Based on the embodiments in this application, all other embodiments obtained by those of ordinary skill in the art without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", "have", and any variations thereof in the specification and claims of this application as well as the foregoing description of drawings are intended to cover non-exclusive inclusions. The terms "first", "second", and the like in the specification and claims of this application or the above accompanying drawings are intended to distinguish between different objects rather than to indicate a particular order or relative importance.

Reference to "embodiment" in this application means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific situations.

The term "and/or" in this application is only an associative relationship for describing associated objects, indicating that three relationships may be present. For example, G and/or H may indicate the following three cases: presence of only G; presence of both G and H; and presence of only H. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that as shown in the accompanying drawings, sizes such as thicknesses, lengths, and widths of various components and sizes such as thicknesses, lengths, and widths of integrated apparatuses in the embodiments of this application are merely for illustrative purposes and should not constitute any limitations on this application.

In this application, "a plurality of" means more than two (inclusive).

A thermal management system for the vehicle of this application can be configured to regulate a temperature of a battery. The battery may include a plurality of battery cells. The battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, cuboid, or of other shapes, which is not limited in the embodiments of this application. Battery cells are typically divided into three types by packaging methods: cylindrical battery cells, prismatic battery cells, and pouch battery cells. This is not limited in the embodiments of this application either.

The battery cell includes a housing, an electrode assembly, and an electrolyte. The housing is configured to accommodate the electrode assembly and the electrolyte. The electrode assembly includes a positive electrode plate, a negative electrode plate, and a separator. Operation of the battery cell mainly depends on migration of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the positive electrode current collector may be made of aluminum. A positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper. A negative electrode active material may be carbon, silicon, or the like. To ensure that large current passes without fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be a wound structure or a laminated structure. The embodiments of this application are not limited thereto.

In the existing thermal management architecture of a vehicle, when a PTC (Positive Temperature Coefficient) is arranged on a low-temperature water side, the PTC cannot directly heat a passenger compartment, and when the PTC is arranged on a high-temperature water side, the PTC cannot directly heat a battery. For a thermal management system architecture where the PTC is arranged on the high-temperature water side, the required power of the PTC is high, and the costs of system components are high. For a thermal management system architecture where the PTC is arranged on the low-temperature water side, although the power of the PTC can be reduced, the entire thermal management system has excess heat during low-load heating of the passenger compartment, and an operation mode of the thermal management system needs to be adjusted frequently. This causes large fluctuations in the air outlet temperature of an air conditioner, reducing the comfort of the passenger compartment. In addition, this increases the control difficulty of the thermal management system, reducing the robustness of the thermal management system.

Based on the above considerations, to solve the technical problem that when the PTC is arranged on the high-temperature water side, the costs of the system components are high, and when the PTC is arranged on the low-temperature water side, the comfort of the passenger compartment is affected and the robustness of the thermal management system is reduced, this application provides a thermal management system for a vehicle. The thermal management system includes: a first heat exchange branch configured to regulate a temperature of a passenger compartment; a second heat exchange branch configured to exchange heat with a battery; and a heating assembly, where the heating assembly includes a heating flow path and a heating element configured to heat the heating flow path, and the heating flow path is selectively in communication with at least one of the first heat exchange branch and the second heat exchange branch to guide a heated heat exchange medium to the first heat exchange branch and/or the second heat exchange branch.

In this thermal management system, the heating flow path may be in communication with the first heat exchange branch and/or the second heat exchange branch, thereby allowing the heating element to be directly configured to regulate the temperature of the passenger compartment and/or regulate the temperature of the battery. Compared with the prior art, this helps to reduce the power of the heating element to reduce the costs of components of the thermal management system. In addition, an operation mode of the thermal management system does not need to be adjusted frequently, so that fluctuations in the air outlet temperature of an air conditioner can be reduced, thereby helping to improve the comfort of the passenger compartment. Moreover, the control difficulty of the thermal management system can be reduced, thereby helping to improve the robustness of the thermal management system.

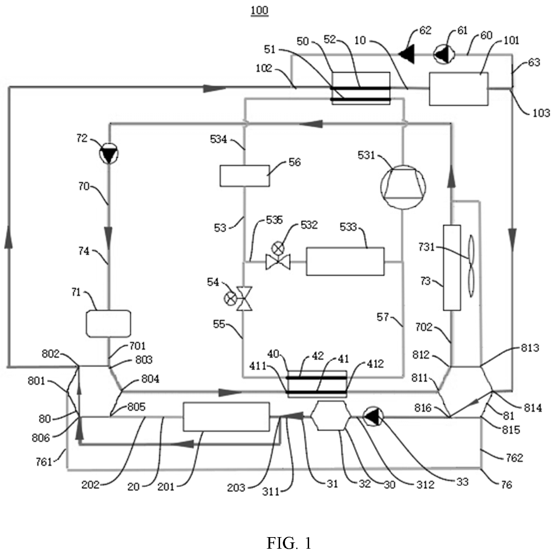

A thermal management system 100 for a vehicle according to embodiments of this application is described below with reference to FIG. 1 to FIG. 7.

As shown in FIG. 1 to FIG. 7, the thermal management system 100 for a vehicle according to the embodiments of this application includes: a first heat exchange branch 10 configured to regulate a temperature of a passenger compartment; a second heat exchange branch 20 configured to exchange heat with a battery 201; and a heating assembly 30, where the heating assembly 30 includes a heating flow path 31 and a heating element 32 configured to heat the heating flow path 31. The heating flow path 31 is selectively in communication with at least one of the first heat exchange branch 10 and the second heat exchange branch 20 to guide a heated heat exchange medium to the first heat exchange branch 10 and/or the second heat exchange branch 20.

As shown in FIG. 1 to FIG. 7, as some optional embodiments of this application, a heat exchanger configured to exchange heat with the passenger compartment may be disposed on the first heat exchange branch 10. For example, a heat exchange core 101 may be provided on the first heat exchange branch 10. The heat exchange core 101 can transfer heat to the interior of the passenger compartment to increase the temperature of the passenger compartment, or the heat exchange core 101 can also absorb heat from the passenger compartment to reduce the temperature of the passenger compartment. As some optional embodiments of this application, air can be blown toward the passenger compartment through a fan or a blower. The heat exchange core 101 may be located downstream of the fan or the blower. The heat exchange core 101 can heat or cool the air around it, so that the air blown toward the passenger compartment by the fan or the blower is hot air or cold air.

As some optional embodiments of this application, the first heat exchange branch 10 can extend into the passenger compartment to directly exchange heat with the passenger compartment so as to regulate the temperature of the passenger compartment.

As some optional embodiments of this application, as shown in FIG. 1 to FIG. 7, a battery 201 may be disposed on the second heat exchange branch 20, and a heat exchange medium may be provided in the second heat exchange branch 20. The heat exchange medium in the second heat exchange branch 20 can flow into the battery 201 to regulate the temperature of the battery 201. As some optional embodiments of this application, the second heat exchange branch 20 can be attached to the battery 201 to exchange heat with the battery 201 so as to regulate the temperature of the battery 201.

The heating assembly 30 includes a heating flow path 31 and a heating element 32. The heating element 32 is configured to heat the heating flow path 31. Specifically, a heat exchange medium is provided in the heating flow path 31. The heating element 32 can heat the heat exchange medium in the heating flow path. As some optional embodiments of this application, the heating element 32 is in communication with the heating flow path 31, and the heating element 32 can heat the heat exchange medium flowing through it. As some optional embodiments of this application, the heating element 32 can be attached to the heating flow path 31 to heat the heat exchange medium in the heating flow path 31.

The heating flow path 31 is selectively in communication with at least one of the first heat exchange branch 10 and the second heat exchange branch 20 to guide the heated heat exchange medium to the first heat exchange branch 10 and/or the second heat exchange branch 20.

As some optional embodiments of this application, as shown in FIG. 1, the heating flow path 31 may be in communication with the first heat exchange branch 10 to guide the heat exchange medium heated by the heating element 32 to the first heat exchange branch 10. In these embodiments, the heating element 32 can be directly configured to regulate the temperature of the passenger compartment.

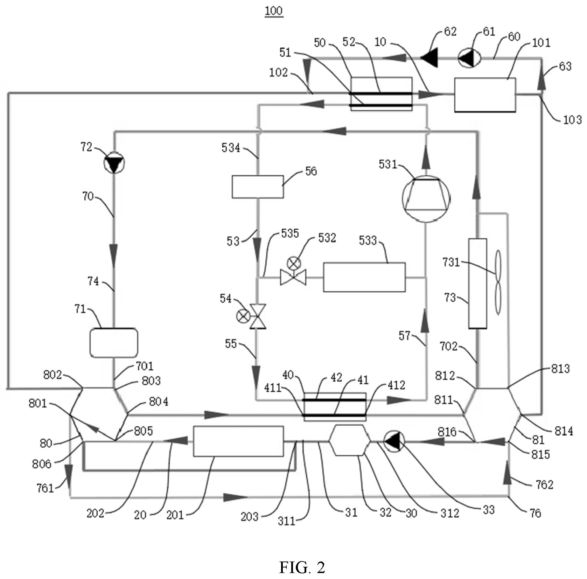

As some optional embodiments of this application, as shown in FIG. 2, the heating flow path 31 may be in communication with the second heat exchange branch 20 to guide the heat exchange medium heated by the heating element 32 to the second heat exchange branch 20. In these embodiments, the heating element 32 can be directly configured to regulate the temperature of the battery 201.

As some optional embodiments of this application, the heating flow path 31 is in communication with the first heat exchange branch 10 and the heating flow path 31 is in communication with the second heat exchange branch 20 to guide the heat exchange medium heated by the heating element 32 to the first heat exchange branch 10 and the second heat exchange branch 20. In these embodiments, the heating element 32 can be directly configured to regulate the temperature of the passenger compartment and the temperature of the battery 201.

As some optional embodiments of this application, valves may be provided between the heating flow path 31 and the first heat exchange branch 10, and between the heating flow path 31 and the second heat exchange branch 20. For example, valves including but not limited to electromagnetic ball valves, electromagnetic butterfly valves, and the like may be provided between the heating flow path 31 and the first heat exchange branch 10, and between the heating flow path 31 and the second heat exchange branch 20. Controlling operation states of the valves allows the heating flow path 31 to be selectively in communication with at least one of the first heat exchange branch 10 and the second heat exchange branch 20.

As some optional embodiments of this application, as shown in FIG. 1 and FIG. 2, the thermal management system 100 may have a first six-way valve 80. The first six-way valve 80 may have a first connection end 801, a second connection end 802, a third connection end 803, a fourth connection end 804, a fifth connection end 805, and a sixth connection end 806. One end of the first heat exchange branch 10 may be in communication with the second connection end 802. One end of the second heat exchange branch 20 may be in communication with the fifth connection end 805. One end of the heating flow path 31 may be in communication with the sixth connection end 806.

In the embodiments where the heating flow path 31 is in communication with the first heat exchange branch 10, the heat exchange medium heated by the heating element 32 and flowing out from the heating flow path 31 can flow into the first heat exchange branch 10 through the sixth connection end 806 and the second connection end 802, and then flow back to the heating flow path 31.

In the embodiments where the heating flow path 31 is in communication with the second heat exchange branch 20, the heat exchange medium heated by the heating element 32 and flowing out from the heating flow path 31 can flow into the second heat exchange branch 20, and then flow back to the heating flow path 31 through the fifth connection end 805 and the first connection end 801.

In the embodiments where the heating flow path 31 is in communication with the first heat exchange branch 10, and the heating flow path 31 is in communication with the second heat exchange branch 20, a part of the heat exchange medium heated by the heating element 32 and flowing out from the heating flow path 31 can flow into the first heat exchange branch 10 through the sixth connection end 806 and the second connection end 802, and then flow back to the heating flow path 31; and another part of the heat exchange medium heated by the heating element 32 and flowing out from the heating flow path 31 can flow into the second heat exchange branch 20, and then flow back to the heating flow path 31 through the fifth connection end 805 and the first connection end 801.

In the thermal management system 100 provided by this application, the heating element 32 can be directly configured to regulate the temperature of the passenger compartment, and the heating element 32 can also be directly configured to regulate the temperature of the battery 201. Compared with a thermal management architecture where the heating element 32 is arranged on a high-temperature water side, a heating element 32 with a relatively low power can be provided, helping to reduce the costs of components of the thermal management system 100. In addition, compared with a thermal management architecture where the heating element 32 is arranged on a low-temperature water side, a mode switching frequency during heating of the passenger compartment can be reduced, and fluctuations in the air outlet temperature of an air conditioner can be reduced, thereby improving the comfort of the passenger compartment. Moreover, since the heating element 32 can be directly configured to regulate the temperature of the passenger compartment and/or regulate the temperature of the battery 201, the control logic of the remaining parts of the thermal management system 100 when excess heat is present can be simplified, thereby reducing the complexity of the control software, reducing the control difficulty of the thermal management system 100, and helping to improve the robustness of the thermal management system 100. Furthermore, since the heating element 32 can be directly in communication with the first heat exchange branch 10, when excess heat is present in the remaining parts of the thermal management system 100, precise regulation of the required heat can be achieved.

For the high-temperature water side and low-temperature water side in the prior art, it can be understood that a flow path on a side for regulating the temperature of the passenger compartment in the thermal management architecture is the high-temperature water side, and a flow path on a side for regulating the temperature of the battery in the thermal management architecture is the low-temperature water side.

As some optional embodiments of this application, the heat exchange medium may be a cooling liquid, for example, but not limited to, a mixed cooling liquid of ethylene glycol and water or a glycerin-based cooling liquid.

In the above technical solution, through the thermal management system 100 of this application, the heating flow path 31 may be in communication with the first heat exchange branch 10 and/or the second heat exchange branch 20, thereby allowing the heating element 32 to be directly configured to regulate the temperature of the passenger compartment and/or regulate the temperature of the battery 201. Compared with the prior art, this helps to reduce the power of the heating element 32 to reduce the costs of components of the thermal management system 100. In addition, an operation mode of the thermal management system 100 does not need to be adjusted frequently, so that fluctuations in the air outlet temperature of an air conditioner can be reduced, thereby helping to improve the comfort of the passenger compartment. Moreover, the control difficulty of the thermal management system 100 can be reduced, thereby helping to improve the robustness of the thermal management system 100.

According to some embodiments of this application, as shown in FIG. 1 and FIG. 2, one end of the first heat exchange branch 10 is selectively in communication with at least one of one end of the second heat exchange branch 20 and one end of the heating flow path 31. The other end of the second heat exchange branch 20 is in communication with the other end of the heating flow path 31. The other end of the first heat exchange branch 10 is selectively in communication with the other end of the heating flow path 31.

The first heat exchange branch 10 may have a seventh end 102 and an eighth end 103 in communication with each other. The second heat exchange branch 20 may have a third end 202 and a fourth end 203 in communication with each other. The heating flow path 31 may have a fifth end 311 and a sixth end 312 in communication with each other.

As some optional embodiments of this application, valves may be provided between the seventh end 102 of the first heat exchange branch 10 and the third end 202 of the second heat exchange branch 20, and between the seventh end 102 of the first heat exchange branch 10 and the fifth end 311 of the heating flow path 31. For example, valves including but not limited to electromagnetic ball valves, electromagnetic butterfly valves, and the like may be provided between the seventh end 102 of the first heat exchange branch 10 and the third end 202 of the second heat exchange branch 20, and between the seventh end 102 of the first heat exchange branch 10 and the fifth end 311 of the heating flow path 31. Controlling operation states of the valves allows one end of the first heat exchange branch 10 to be selectively in communication with at least one of one end of the second heat exchange branch 20 and one end of the heating flow path 31. The fourth end 203 of the second heat exchange branch 20 may be in communication with the fifth end 311 of the heating flow path 31. A valve may be provided between the eighth end 103 of the first heat exchange branch 10 and the sixth end 312 of the heating flow path 31. For example, a valve including but not limited to an electromagnetic ball valve, an electromagnetic butterfly valve, and the like may be provided between the eighth end 103 of the first heat exchange branch 10 and the sixth end 312 of the heating flow path 31. Controlling an operation state of the valve allows the other end of the first heat exchange branch 10 to be selectively in communication with the other end of the heating flow path 31.

As some optional embodiments of this application, as shown in FIG. 1 and FIG. 2, the thermal management system 100 may have a first six-way valve 80. The first six-way valve 80 may have a first connection end 801, a second connection end 802, a third connection end 803, a fourth connection end 804, a fifth connection end 805, and a sixth connection end 806.

The seventh end 102 of the first heat exchange branch 10 may be in communication with the second connection end 802. The third end 202 of the second heat exchange branch 20 may be in communication with the fifth connection end 805. The fifth end 311 of the heating flow path 31 may be in communication with the sixth connection end 806. Controlling an operation state of the first six-way valve 80 allows one end of the first heat exchange branch 10 to be selectively in communication with at least one of one end of the second heat exchange branch 20 and one end of the heating flow path 31.

As some optional embodiments of this application, as shown in FIG. 1 and FIG. 2, the thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816.

The eighth end 103 of the first heat exchange branch 10 may be in communication with the tenth connection end 814. The sixth end 312 of the heating flow path 31 may be in communication with the twelfth connection end 816. Controlling an operation state of the second six-way valve 81 allows the other end of the first heat exchange branch 10 to be selectively in communication with the other end of the heating flow path 31.

In the above technical solution, one end of the heating branch may be selectively in communication with any one of the first heat exchange branch 10 and the second heat exchange branch 20, so that the heating element 32 can be directly configured to regulate the temperature of the passenger compartment and/or regulate the temperature of the battery 201, thereby simplifying the control logic of the thermal management system 100 when excess heat is present, thereby reducing the complexity of the control software, reducing the control difficulty of the thermal management system 100, and helping to improve the robustness of the thermal management system 100.

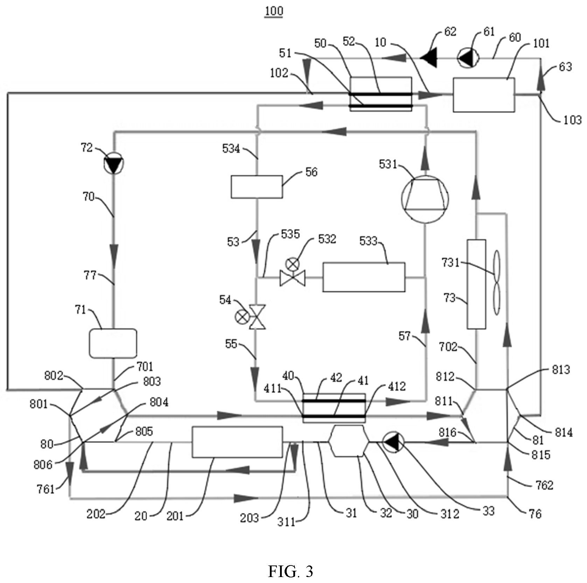

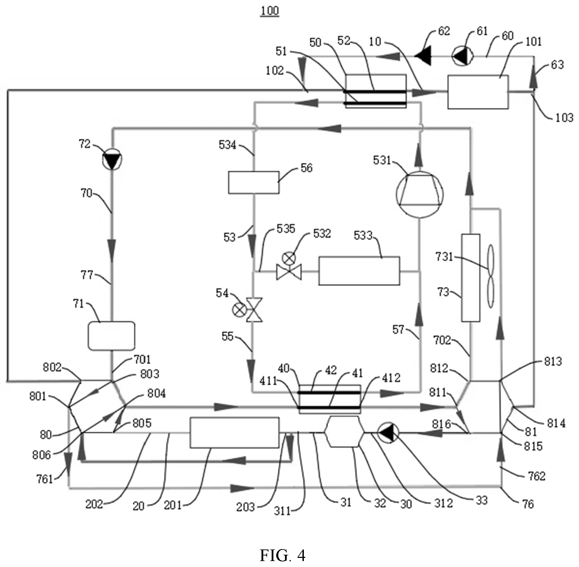

According to some embodiments of this application, as shown in FIG. 3 and FIG. 4, the thermal management system 100 for a vehicle further includes a first heat exchanger 40. The first heat exchanger 40 is selectively in communication with at least one of the heating flow path 31 and the second heat exchange branch 20 to guide the heated heat exchange medium to the first heat exchanger 40. The first heat exchanger 40 is adapted to transfer heat to the first heat exchange branch 10.

As shown in FIG. 3 and FIG. 4, a first flow sub-passage 41 may be provided in the first heat exchanger 40. The first flow sub-passage 41 may be selectively in communication with at least one of the heating flow path 31 and the second heat exchange branch 20.

As some optional embodiments of this application, the first flow sub-passage 41 may be in communication with the heating flow path 31 to guide the heat exchange medium heated by the heating element 32 to the first heat exchanger 40.

As some optional embodiments of this application, the first flow sub-passage 41 may be in communication with the second heat exchange branch 20 to guide the heat exchange medium heated by the heating element 32 to the first heat exchanger 40 after the heat exchange medium passes through the second heat exchange branch 20.

As some optional embodiments of this application, the first flow sub-passage 41 may be in communication with the heating flow path 31, and the first flow sub-passage 41 may be in communication with the second heat exchange branch 20 to guide a part of the heat exchange medium heated by the heating element 32 to the first heat exchanger 40, and guide another part of the heat exchange medium heated by the heating element 32 to the first heat exchanger 40 after the heat exchange medium passes through the second heat exchange branch 20.

As some optional embodiments of this application, valves may be provided between the first flow sub-passage 41 and the heating flow path 31, and between the first flow sub-passage 41 and the second heat exchange branch 20. For example, valves including but not limited to electromagnetic ball valves, electromagnetic butterfly valves, and the like may be provided between the first flow sub-passage 41 and the heating flow path 31, and between the first flow sub-passage 41 and the second heat exchange branch 20. Controlling operation states of the valves allows the first heat exchanger 40 to be selectively in communication with at least one of the heating flow path 31 and the second heat exchange branch 20.

As some optional embodiments of this application, as shown in FIG. 3 and FIG. 4, the thermal management system 100 may have a first six-way valve 80. The first six-way valve 80 may have a first connection end 801, a second connection end 802, a third connection end 803, a fourth connection end 804, a fifth connection end 805, and a sixth connection end 806.

One end of the first flow sub-passage 41 of the first heat exchanger 40 may be in communication with the fourth connection end 804. One end of the second heat exchange branch 20 may be in communication with the fifth connection end 805. One end of the heating flow path 31 may be in communication with the sixth connection end 806. Controlling an operation state of the first six-way valve 80 allows the first heat exchanger 40 to be selectively in communication with at least one of the heating flow path 31 and the second heat exchange branch 20.

The first heat exchanger 40 is adapted to transfer heat to the first heat exchange branch 10. As some optional embodiments of this application, the first heat exchanger 40 may be attached to the first heat exchange branch 10 to exchange heat with the first heat exchanger 40. As some optional embodiments of this application, a heat conduction member may be provided between the first heat exchange branch 10 and the first heat exchanger 40, and heat exchange between the first heat exchange branch 10 and the first heat exchanger 40 is achieved through the heat conduction member.

In the above technical solution, the first heat exchanger 40 is provided, and the first heat exchanger 40 is selectively in communication with at least one of the heating flow path 31 and the second heat exchange branch 20, so that the first heat exchanger 40 can absorb the heat of the heating element 32, and then the heat is transferred to the first heat exchange branch 10 through the first heat exchanger 40 to regulate the temperature of the passenger compartment, thereby allowing the thermal management system 100 of this application to have a plurality of operation modes to meet user needs.

According to some embodiments of this application, as shown in FIG. 3 and FIG. 4, the first heat exchanger 40 has a first end 411 and a second end 412 in communication with each other. The first end 411 may be selectively in communication with at least one of one end of the second heat exchange branch 20 and one end of the heating flow path 31. The second end 412 may be selectively in communication with the other end of the heating flow path 31.

The first flow sub-passage 41 may be provided in the first heat exchanger 40. Two ends of the first flow sub-passage 41 are the first end 411 and the second end 412 in communication with each other, respectively.

As some optional embodiments of this application, valves may be provided between the first end 411 of the first heat exchanger 40 and the third end 202 of the second heat exchange branch 20, and between the first end 411 of the first heat exchanger 40 and the fifth end 311 of the heating flow path 31. For example, valves including but not limited to electromagnetic ball valves, electromagnetic butterfly valves, and the like may be provided between the first end 411 of the first heat exchanger 40 and the third end 202 of the second heat exchange branch 20, and between the first end 411 of the first heat exchanger 40 and the fifth end 311 of the heating flow path 31. Controlling operation states of the valves allows the first end 411 of the first heat exchanger 40 to be in communication with at least one of one end of the second heat exchange branch 20 and one end of the heating flow path 31. A valve may be provided between the second end 412 of the first heat exchanger 40 and the sixth end 312 of the heating flow path 31. For example, a valve including but not limited to an electromagnetic ball valve, an electromagnetic butterfly valve, and the like may be provided between the second end 412 of the first heat exchanger 40 and the sixth end 312 of the heating flow path 31. Controlling an operation state of the valve allows the second end 412 of the first heat exchanger 40 to be selectively in communication with the other end of the heating flow path 31.

As some optional embodiments of this application, as shown in FIG. 3 and FIG. 4, the thermal management system 100 may have a first six-way valve 80. The first six-way valve 80 may have a first connection end 801, a second connection end 802, a third connection end 803, a fourth connection end 804, a fifth connection end 805, and a sixth connection end 806.

The first end 411 of the first heat exchanger 40 may be in communication with the fourth connection end 804. The third end 202 of the second heat exchange branch 20 may be in communication with the fifth connection end 805. The fifth end 311 of the heating flow path 31 may be in communication with the sixth connection end 806. Controlling an operation state of the first six-way valve 80 allows the first end 411 of the first heat exchanger 40 to be in communication with at least one of one end of the second heat exchange branch 20 and one end of the heating flow path 31.

As some optional embodiments of this application, as shown in FIG. 3 and FIG. 4, the thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816.

The second end 412 of the first heat exchanger 40 may be in communication with the seventh connection end 811. The sixth end 312 of the heating flow path 31 may be in communication with the twelfth connection end 816. Controlling an operation state of the second six-way valve 81 allows the second end 412 of the first heat exchanger 40 to be selectively in communication with the other end of the heating flow path 31.

In the above technical solution, the first end 411 of the first heat exchanger 40 is selectively in communication with at least one of one end of the second heat exchange branch 20 and one end of the heating flow path 31, and the second end 412 of the first heat exchanger 40 is selectively in communication with the other end of the heating flow path 31, so that the first heat exchanger 40 can be directly in communication with the second heat exchange branch 20, the first heat exchanger 40, and the heating flow path 31, and thus the first heat exchanger 40 can absorb the heat of the heating element 32, and then the heat is transferred to the first heat exchange branch 10 through the first heat exchanger 40 to regulate the temperature of the passenger compartment, thereby allowing the thermal management system 100 of this application to have a plurality of operation modes to meet user needs.

According to some embodiments of this application, as shown in FIG. 3 and FIG. 4, the thermal management system 100 for a vehicle further includes a second heat exchanger 50. The second heat exchanger 50 is adapted to perform heat transfer with the first heat exchanger 40, and the second heat exchanger 50 is in communication with the first heat exchange branch 10.

The first heat exchanger 40 may have a second flow sub-passage 42. The second flow sub-passage 42 is arranged in parallel with the first flow sub-passage 41, that is, the second flow sub-passage 42 is not in communication with the first flow sub-passage 41. The second heat exchanger 50 may have a third flow sub-passage 51. The second flow sub-passage 42 may be selectively in communication with the third flow sub-passage 51. In addition, the second heat exchanger 50 may have a fourth flow sub-passage 52. The fourth flow sub-passage 52 is arranged in parallel with the third flow sub-passage 51, that is, the fourth flow sub-passage 52 is not in communication with the third flow sub-passage 51. The fourth flow sub-passage 52 of the second heat exchanger 50 is in communication with the first heat exchange branch 10.

A refrigerant may be provided in the second flow sub-passage 42 and the third flow sub-passage 51. The refrigerant is, for example, but not limited to, R134a (1,1,1,2-tetrafluoroethane) or R1234YF (2,3,3,3-tetrafluoropropene).

It can be understood that the first flow sub-passage 41 of the first heat exchanger 40 may be selectively in communication with at least one of one end of the second heat exchange branch 20 and one end of the heating flow path 31, thereby allowing the heat exchange medium heated by the heating element 32 to flow through the first heat exchanger 40, and allowing the first heat exchanger 40 to absorb the heat of the heating element 32. Then, when the refrigerant flows through the second flow sub-passage 42, the refrigerant can absorb the heat of the first heat exchanger 40. In short, the refrigerant in the second flow sub-passage 42 can absorb the heat of the heat exchange medium in the first flow sub-passage 41. Then, when the refrigerant after absorbing the heat of the heat exchange medium flows through the third flow sub-passage 51 of the second heat exchanger 50, the second heat exchanger 50 can absorb the heat of the refrigerant and transfer the heat to the heat exchange medium flowing through the fourth flow sub-passage 52. In short, the heat exchange medium of the fourth flow sub-passage 52 can absorb the heat of the refrigerant in the third flow sub-passage 51. Then, the heat exchange medium in the fourth flow sub-passage 52 of the second heat exchanger 50 can transfer heat to the first heat exchange branch 10 for regulating the temperature of the passenger compartment.

In the above technical solution, the second heat exchanger 50 is provided, the second heat exchanger 50 is adapted to perform heat transfer with the first heat exchanger 40, and the second heat exchanger 50 is in communication with the first heat exchange branch 10, so that the heat of the heating element 32 can be reliably guided into the first heat exchange branch 10 through the first heat exchanger 40 and the second heat exchanger 50 to regulate the temperature of the passenger compartment, thereby helping to improve the operation reliability of the thermal management system 100.

According to some embodiments of this application, as shown in FIG. 2 to FIG. 7, the thermal management system 100 for a vehicle further includes a compressor 531, a first expansion valve 532, and an evaporator 533. The compressor 531, the second heat exchanger 50, the first expansion valve 532, and the evaporator 533 are connected in series to form a refrigeration flow path 53.

A refrigerant may be provided in the compressor 531, the second heat exchanger 50, the first expansion valve 532, and the evaporator 533. The refrigerant is, for example, but not limited to, R134a (1,1,1,2-tetrafluoroethane) or R1234YF (2,3,3,3-tetrafluoropropene). The refrigerant is compressed by the compressor 531 into a high-temperature and high-pressure refrigerant and then flows into the third flow sub-passage 51 of the second heat exchanger 50. After passing through the second heat exchanger 50, the refrigerant in the third flow sub-passage 51 dissipates heat and becomes a low-temperature and high-pressure liquid refrigerant. The low-temperature and high-pressure liquid refrigerant is depressurized by the first expansion valve 532 into a low-temperature and low-pressure refrigerant and then flows into the evaporator 533. After passing through the evaporator 533, the refrigerant absorbs heat and then enters the compressor 531 to start the next cycle.

As some optional embodiments of this application, the refrigerant can directly absorb heat from the passenger compartment after passing through the evaporator 533. As some optional embodiments of this application, after passing through the evaporator 533, the refrigerant can absorb heat from the air around the evaporator 533, and then the air around the evaporator 533 from which heat has been absorbed can be blown into the passenger compartment through components such as a fan or a blower.

In the above technical solution, the compressor 531, the second heat exchanger 50, the first expansion valve 532, and the evaporator 533 are connected in series to form the refrigeration flow path 53 for reducing the temperature of the passenger compartment, thereby reliably achieving the function of the thermal management system 100 in reducing the temperature of the passenger compartment.

According to some embodiments of this application, as shown in FIG. 2 to FIG. 7, the thermal management system 100 for a vehicle further includes a second expansion valve 54. The second expansion valve 54 is connected in series between the second heat exchanger 50 and the first heat exchanger 40, and the second expansion valve 54 is connected in parallel with the first expansion valve 532.

That is, two ends of the second expansion valve 54 may be in communication with the second heat exchanger 50 and the first heat exchanger 40, respectively; and the second expansion valve 54 may be connected in parallel with the first expansion valve 532.

As some optional embodiments of this application, the thermal management system 100 may further include a first sub-branch 57. The second flow sub-passage 42 of the first heat exchanger 40 and the second expansion valve 54 may both be located in the first sub-branch 57. One end of the first sub-branch 57 may be in communication with any position between the third flow sub-passage 51 of the second heat exchanger 50 and the first expansion valve 532. The other end of the first sub-branch 57 may be in communication with any position between the evaporator 533 and the compressor 531. In this way, the compressor 531, the third flow sub-passage 51 of the second heat exchanger 50, the first expansion valve 532, and the evaporator 533 may be connected in series to form the refrigeration flow path 53. The compressor 531, the third flow sub-passage 51 of the second heat exchanger 50, the second expansion valve 54, and the second flow sub-passage 42 of the first heat exchanger 40 may alternatively be connected in series to form a first circulation loop 55.

As some optional embodiments of this application, the thermal management system 100 may further include a first sub-branch 57. The second flow sub-passage 42 of the first heat exchanger 40 and the second expansion valve 54 may both be located in the first sub-branch 57. The refrigeration flow path 53 may include a second sub-branch 534 and a third sub-branch 535. The second sub-branch 534 is connected in series with the third sub-branch 535. The compressor 531 and the third flow sub-passage 51 of the second heat exchanger 50 may be located in the second sub-branch 534. The first expansion valve 532 and the evaporator 533 may be located in the third sub-branch 535. The first sub-branch 57 is connected in parallel with the third sub-branch 535.

It can be understood that the refrigeration flow path 53 formed by connecting the compressor 531, the third flow sub-passage 51 of the second heat exchanger 50, the first expansion valve 532, and the evaporator 533 in series can be used for reducing the temperature of the passenger compartment. The first circulation loop 55 formed by connecting the compressor 531, the third flow sub-passage 51 of the second heat exchanger 50, the second expansion valve 54, and the second flow sub-passage 42 of the first heat exchanger 40 in series can be used for transferring the heat of the heating element 32 to the first heat exchange branch 10 to regulate the temperature of the passenger compartment.

Controlling operation states of the first expansion valve 532 and the second expansion valve 54 allows at least one of the refrigeration flow path 53 and the first circulation loop 55 to be switched on for operation. As some optional embodiments of this application, controlling the first expansion valve 532 to be closed and the second expansion valve 54 to be opened allows the first circulation loop 55 to be switched on for operation and the refrigeration flow path 53 to be switched off. As some optional embodiments of this application, controlling the second expansion valve 54 to be closed and the first expansion valve 532 to be opened allows the refrigeration flow path 53 to be switched on for operation and the first circulation loop 55 to be switched off. As some optional embodiments of this application, controlling the first expansion valve 532 to be opened and the second expansion valve 54 to be opened allows both the first circulation loop 55 and the refrigeration flow path 53 to be switched on for operation.

In the above technical solution, the second expansion valve 54 is connected in series between the second heat exchanger 50 and the first heat exchanger 40, and the second expansion valve 54 is connected in parallel with the first expansion valve 532. This allows the first circulation loop 55 and the refrigeration flow path 53 to share the compressor 531 and the third flow sub-passage 51 of the second heat exchanger 50, allowing the thermal management system 100 to have ingenious design, and helping to reduce the number of components and the length of pipelines, thereby reducing the production cost of the thermal management system 100.

According to some embodiments of this application, as shown in FIG. 2 to FIG. 7, the thermal management system 100 for a vehicle further includes a liquid storage apparatus 56. The liquid storage apparatus 56 is connected in series between the first expansion valve 532 and the second heat exchanger 50.

It should be noted that the refrigerant is compressed by the compressor 531 into a high-temperature and high-pressure refrigerant and then flows into the third flow sub-passage 51 of the second heat exchanger 50. After passing through the second heat exchanger 50, the refrigerant in the third flow sub-passage 51 dissipates heat and becomes a low-temperature and high-pressure liquid refrigerant. After flowing through the liquid storage apparatus 56, the low-temperature and high-pressure refrigerant passes through the first expansion valve 532. The liquid storage apparatus 56 can play a liquid sealing role to reduce the probability of a high-pressure refrigerant gas surging in the loop, and can also replenish liquid to the loop.

As some optional embodiments of this application, the liquid storage apparatus 56 may be independent of the first circulation loop 55, that is, the liquid storage apparatus 56 is located in the refrigeration flow path 53, but the liquid storage apparatus 56 is not located in the first circulation loop 55. In the embodiments where the thermal management system 100 includes the first sub-branch 57 and the refrigeration flow path 53 includes the second sub-branch 534 and the third sub-branch 535, the liquid storage apparatus 56 may be located in the third sub-branch 535.

As some optional embodiments of this application, the first circulation loop 55 and the refrigeration flow path 53 can share the liquid storage apparatus 56, that is, the liquid storage apparatus 56 is located in the refrigeration flow path 53, and the liquid storage apparatus 56 is also located in the first circulation loop 55. In the embodiments where the thermal management system 100 includes the first sub-branch 57 and the refrigeration flow path 53 includes the second sub-branch 534 and the third sub-branch 535, the liquid storage apparatus 56 may be located in the second sub-branch 534.

In the above technical solution, the liquid storage apparatus 56 is connected in series between the first expansion valve 532 and the second heat exchanger 50, helping to improve the operation reliability of the thermal management system 100. In addition, the provision of the liquid storage apparatus 56 in the second sub-branch 534 allows the first circulation loop 55 and the refrigeration flow path 53 to share the liquid storage apparatus 56, allowing the thermal management system 100 to have ingenious design, and helping to reduce the number of components and the length of pipelines, thereby reducing the production cost of the thermal management system 100.

According to some embodiments of this application, as shown in FIG. 1 to FIG. 7, the second heat exchanger 50 is configured as a part of the first heat exchange branch 10.

Specifically, the fourth flow sub-passage 52 of the second heat exchanger 50 can be configured as a part of the first heat exchange branch 10. It can be understood that the first flow sub-passage 41 of the first heat exchanger 40 is selectively in communication with at least one of one end of the second heat exchange branch 20 and one end of the heating flow path 31, thereby allowing the heat exchange medium heated by the heating element 32 to flow through the first heat exchanger 40, and allowing the first heat exchanger 40 to absorb the heat of the heating element 32.

Then, the heat of the first heat exchanger 40 can be absorbed and transferred to the second heat exchanger 50 through the first circulation loop 55 formed by the compressor 531, the third flow sub-passage 51 of the second heat exchanger 50, the second expansion valve 54, and the second flow sub-passage 42 of the first heat exchanger 40. Since the fourth flow sub-passage 52 of the second heat exchanger 50 is configured as a part of the first heat exchange branch 10, the heat of the heating element 32 can be reliably transferred to the first heat exchange branch 10 to regulate the temperature of the passenger compartment.

In the above technical solution, the second heat exchanger 50 is configured as a part of the first heat exchange branch 10, so that the heat of the heating element 32 can be reliably transferred to the first heat exchange branch 10 to regulate the temperature of the passenger compartment, thereby helping to improve the operation reliability of the thermal management system 100.

According to some embodiments of this application, as shown in FIG. 2 to FIG. 4 and FIG. 7, the thermal management system 100 for a vehicle further includes a third heat exchange branch 60. The third heat exchange branch 60 is connected to the first heat exchange branch 10, and the third heat exchange branch 60 has a first pump 61 and a one-way valve 62 connected in series.

The third heat exchange branch 60 and the first heat exchange branch 10 can jointly form a second circulation loop 63. Specifically, the first pump 61, the one-way valve 62, the fourth flow sub-passage 52 of the second heat exchanger 50, and the heat exchange core 101 can be connected in series to form the second circulation loop 63. A heat exchange medium may be provided in the second circulation loop 63. The heat exchange medium in the fourth flow sub-passage 52 in the second circulation loop 63 can perform heat transfer with the second heat exchanger 50, thereby achieving continuous and uninterrupted heat transfer between the first heat exchange branch 10 and the second heat exchanger 50.

In the above technical solution, the third heat exchange branch 60 is configured to be connected in parallel with the first heat exchange branch 10, and the third heat exchange branch 60 is configured to have the first pump 61 and the one-way valve 62 connected in series, so that the first pump 61, the one-way valve 62, the fourth flow sub-passage 52 of the second heat exchanger 50, and the heat exchange core 101 can be connected in series to form the second circulation loop 63, thereby achieving continuous heat transfer between the first heat exchange branch 10 and the second heat exchanger 50, achieving reliable, stable, and efficient regulation of the temperature of the passenger compartment, and improving the user comfort.

It can be understood that in this application, the refrigerant circulates in the refrigeration flow path 53 and the first circulation loop 55, and the heat exchange medium circulates in the remaining flow paths, branches, loops, and the like.

According to some embodiments of this application, as shown in FIG. 1 to FIG. 7, the thermal management system 100 for a vehicle further includes a heat dissipation branch 70 configured to exchange heat with an electric drive system 71. The heat dissipation branch 70 is selectively in communication with the first heat exchanger 40 to form a first circulation flow path 74; and/or the heat dissipation branch 70 is selectively in communication with the first heat exchange branch 10 and the first heat exchanger 40 to guide a heat exchange medium to the first heat exchanger 40; and/or the heat dissipation branch 70 is selectively in communication with the first heat exchange branch 10 to form a second circulation flow path 75.

The heat dissipation branch 70 may have a ninth end 701 and a tenth end 702 in communication with each other.

As some optional embodiments of this application, as shown in FIG. 1 to FIG. 7, the electric drive system 71 may be provided on the heat dissipation branch 70, and a heat exchange medium may be provided in the heat dissipation branch 70. The heat exchange medium in the heat dissipation branch 70 can flow through the electric drive system 71 to regulate a temperature of the electric drive system 71. As some optional embodiments of this application, the heat dissipation branch 70 can be attached to the electric drive system 71 to exchange heat with the electric drive system 71 so as to regulate the temperature of the electric drive system 71. The electric drive system 71 can be understood as an electric drive system of a vehicle, for example, but not limited to, a wheel-side motor or a front-mounted motor.

As shown in FIG. 1 and FIG. 2, the heat dissipation branch 70 is selectively in communication with the first heat exchanger 40 to form the first circulation flow path 74. As some optional embodiments of this application, a valve may be provided between the heat dissipation branch 70 and the first heat exchanger 40. For example, a valve including but not limited to an electromagnetic ball valve, an electromagnetic butterfly valve, and the like may be provided between the heat dissipation branch 70 and the first heat exchanger 40. Controlling an operation state of the valve allows the heat dissipation branch 70 to be selectively in communication with the first heat exchanger 40.

As some optional embodiments of this application, as shown in FIG. 1 and FIG. 2, the thermal management system 100 may have a first six-way valve 80. The first six-way valve 80 may have a first connection end 801, a second connection end 802, a third connection end 803, a fourth connection end 804, a fifth connection end 805, and a sixth connection end 806. The first end 411 of the first flow sub-passage 41 of the first heat exchanger 40 may be in communication with the fourth connection end 804. The ninth end 701 of the heat dissipation branch 70 may be in communication with the third connection end 803. The thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816. The second end 412 of the first flow sub-passage 41 of the first heat exchanger 40 may be in communication with the seventh connection end 811. The tenth end 702 of the heat dissipation branch 70 may be in communication with the eighth connection end 812. Controlling operation states of the first six-way valve 80 and the second six-way valve 81 allows the heat dissipation branch 70 to be selectively in communication with the first heat exchanger 40. The heat dissipation branch 70 is in communication with the first heat exchanger 40 to form the first circulation flow path 74, so that heat dissipation can be performed on the electric drive system 71. In addition, the residual heat of the electric drive system 71 can also be absorbed by the first heat exchanger 40, and the residual heat of the electric drive system 71 can be used for heating the passenger compartment (for example, the residual heat of the electric drive system 71 absorbed by the first heat exchanger 40 is transferred to the second heat exchanger 50 through the second circulation loop 63).

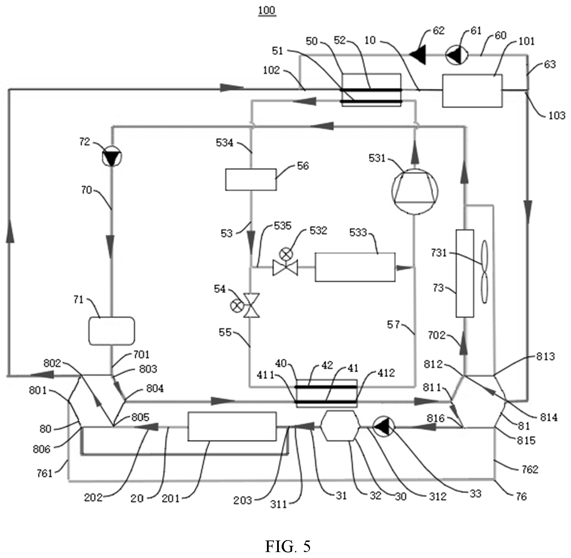

As shown in FIG. 5, the heat dissipation branch 70 is selectively in communication with the first heat exchange branch 10 and the first heat exchanger 40 to guide the heat exchange medium to the first heat exchanger 40. As some optional embodiments of this application, the heat dissipation branch 70 may be connected in series between the first heat exchange branch 10 and the first heat exchanger 40, that is, the heat dissipation branch 70, the first heat exchanger 40, and the first heat exchange branch 10 are connected in series in sequence. Valves may be provided between the heat dissipation branch 70 and the first heat exchanger 40, between the heat dissipation branch 70 and the first heat exchange branch 10, and between the first heat exchanger 40 and the first heat exchange branch 10. For example, valves including but not limited to electromagnetic ball valves, electromagnetic butterfly valves, and the like may be provided between the heat dissipation branch 70 and the first heat exchanger 40, between the heat dissipation branch 70 and the first heat exchange branch 10, and between the first heat exchanger 40 and the first heat exchange branch 10. Controlling operation states of the valves allows the heat dissipation branch 70 to be selectively in communication with the first heat exchange branch 10 and the first heat exchanger 40.

As some optional embodiments of this application, as shown in FIG. 5, the thermal management system 100 may have a first six-way valve 80. The first six-way valve 80 may have a first connection end 801, a second connection end 802, a third connection end 803, a fourth connection end 804, a fifth connection end 805, and a sixth connection end 806. The thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816.

The first end 411 of the first flow sub-passage 41 of the first heat exchanger 40 may be in communication with the fourth connection end 804. The ninth end 701 of the heat dissipation branch 70 may be in communication with the third connection end 803. The second end 412 of the first flow sub-passage 41 of the first heat exchanger 40 may be in communication with the seventh connection end 811. The sixth end 312 of the heating flow path 31 may be in communication with the twelfth connection end 816. The fifth end 311 of the heating flow path 31 may be in communication with the fourth end 203 of the second heat exchange branch 20. The third end 202 of the second heat exchange branch 20 may be in communication with the fifth connection end 805. The seventh end 102 of the first heat exchange branch 10 may be in communication with the second connection end 802. The eighth end 103 of the first heat exchange branch 10 may be in communication with the tenth connection end 814. The tenth end 702 of the heat dissipation branch 70 may be in communication with the eighth connection end 812. Controlling operation states of the first six-way valve 80 and the second six-way valve 81 allows the heat dissipation branch 70 to be selectively in communication with the first heat exchange branch 10 and the first heat exchanger 40. The heat dissipation branch 70 is selectively in communication with the first heat exchange branch 10 and the first heat exchanger 40, so that when the refrigeration flow path 53 operates and absorbs heat from the passenger compartment, the heat exchange medium in the fourth flow sub-passage 52 of the second heat exchanger 50 can absorb the heat from the passenger compartment absorbed by the refrigeration flow path 53, and enter the battery 201 through the second six-way valve 81, the heat dissipation branch 70, the first heat exchanger 40, and the like, to heat the battery 201 through the residual heat of the passenger compartment.

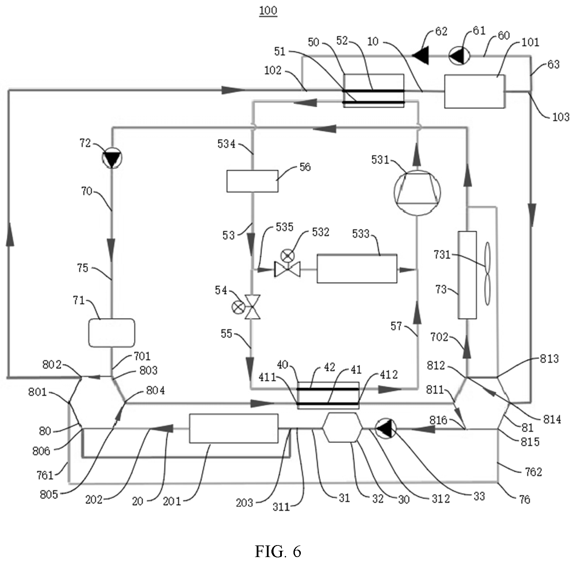

As shown in FIG. 6, the heat dissipation branch 70 is selectively in communication with the first heat exchange branch 10 to form the second circulation flow path 75. As some optional embodiments of this application, a valve may be provided between the heat dissipation branch 70 and the first heat exchange branch 10. For example, a valve including but not limited to an electromagnetic ball valve, an electromagnetic butterfly valve, and the like may be provided between the heat dissipation branch 70 and the first heat exchange branch 10. Controlling an operation state of the valve allows the heat dissipation branch 70 to be selectively in communication with the first heat exchange branch 10 to form the second circulation flow path 75.

As some optional embodiments of this application, as shown in FIG. 6, the thermal management system 100 may have a first six-way valve 80. The first six-way valve 80 may have a first connection end 801, a second connection end 802, a third connection end 803, a fourth connection end 804, a fifth connection end 805, and a sixth connection end 806. The thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816.

The ninth end 701 of the heat dissipation branch 70 may be in communication with the third connection end 803. The seventh end 102 of the first heat exchange branch 10 may be in communication with the second connection end 802. The eighth end 103 of the first heat exchange branch 10 may be in communication with the tenth connection end 814. The tenth end 702 of the heat dissipation branch 70 may be in communication with the eighth connection end 812. Controlling operation states of the first six-way valve 80 and the second six-way valve 81 allows the heat dissipation branch 70 to be selectively in communication with the first heat exchange branch 10 to form the second circulation flow path 75.

The heat dissipation branch 70 is selectively in communication with the first heat exchange branch 10, so that when the refrigeration flow path 53 operates and absorbs heat from the passenger compartment, and the first circulation loop 55 operates and absorbs heat from the battery 201, the heat exchange medium in the second circulation flow path 75 can absorb the heat absorbed by the heat dissipation branch 70 and the first circulation loop 55 through the second heat exchanger 50, and the electric drive system 71 is heated by the heat or the heat is dissipated to the environment through the heat dissipation branch 70.

In the above technical solution, as shown in FIG. 1 and FIG. 2, the heat dissipation branch 70 is in communication with the first heat exchanger 40 to form the first circulation flow path 74, so that heat dissipation can be performed on the electric drive system 71. In addition, the residual heat of the electric drive system 71 can also be absorbed by the first heat exchanger 40, and the residual heat of the electric drive system 71 can be used for heating the passenger compartment.

As shown in FIG. 5, the heat dissipation branch 70 is selectively in communication with the first heat exchange branch 10 and the first heat exchanger 40, so that when the refrigeration flow path 53 operates and absorbs heat from the passenger compartment, the heat exchange medium in the fourth flow sub-passage 52 of the second heat exchanger 50 can absorb the heat from the passenger compartment absorbed by the refrigeration flow path 53, and enter the battery 201 through the second six-way valve 81, the heat dissipation branch 70, the first heat exchanger 40, and the like, to heat the battery 201 through the residual heat of the passenger compartment.

As shown in FIG. 6, the heat dissipation branch 70 is selectively in communication with the first heat exchange branch 10, so that when the refrigeration flow path 53 operates and absorbs heat from the passenger compartment, and the first circulation loop 55 operates and absorbs heat from the battery 201, the heat exchange medium in the second circulation flow path 75 can absorb the heat absorbed by the heat dissipation branch 70 and the first circulation loop 55 through the second heat exchanger 50, and the electric drive system 71 is heated by the heat or the heat is dissipated to the environment through the heat dissipation branch 70.

The thermal management system 100 of this application may be selectively in communication with at least one of the first heat exchanger 40 and the first heat exchange branch 10 through the heat dissipation branch 70 to achieve a plurality of operation modes of the thermal management system 100, thereby helping to improve the operation performance of the thermal management system 100.

According to some embodiments of this application, as shown in FIG. 3, FIG. 4, and FIG. 7, the thermal management system 100 for a vehicle further includes a communication branch 76. The communication branch 76 is selectively in communication with the heat dissipation branch 70 to form a third circulation flow path 77; and/or the communication branch 76 is selectively in communication with the heat dissipation branch 70 and the second heat exchange branch 20 to guide the heat exchange medium to the heat dissipation branch 70.

As shown in FIG. 1 to FIG. 7, the communication branch 76 may have an eleventh end 761 and a twelfth end 762 in communication with each other.

As shown in FIG. 3 and FIG. 4, the communication branch 76 may be selectively in communication with the heat dissipation branch 70 to form the third circulation flow path 77. As some optional embodiments of this application, a valve may be provided between the communication branch 76 and the heat dissipation branch 70. For example, a valve including but not limited to an electromagnetic ball valve, an electromagnetic butterfly valve, and the like may be provided between the communication branch 76 and the heat dissipation branch 70. Controlling an operation state of the valve allows the communication branch 76 to be selectively in communication with the heat dissipation branch 70 to form the third circulation flow path 77.

As some optional embodiments of this application, as shown in FIG. 3 and FIG. 4, the thermal management system 100 may have a first six-way valve 80. The first six-way valve 80 may have a first connection end 801, a second connection end 802, a third connection end 803, a fourth connection end 804, a fifth connection end 805, and a sixth connection end 806. The thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816. The ninth end 701 of the heat dissipation branch 70 may be in communication with the third connection end 803. The eleventh end 761 of the communication branch 76 may be in communication with the first connection end 801. The tenth end 702 of the heat dissipation branch 70 may be in communication with the eighth connection end 812. The twelfth end 762 of the communication branch 76 may be in communication with the eleventh connection end 815. Controlling operation states of the first six-way valve 80 and the second six-way valve 81 allows the communication branch 76 to be selectively in communication with the heat dissipation branch 70 to form the third circulation flow path 77. The communication branch 76 is selectively in communication with the heat dissipation branch 70 to form the third circulation flow path 77, so that heat dissipation can be performed on the electric drive system 71. In addition, the electric drive system 71 and the first heat exchanger 40 may be not located in a same loop, thereby allowing the first heat exchanger 40 to form a loop with the heating assembly 30, and helping to improve the reliability of the thermal management system 100.

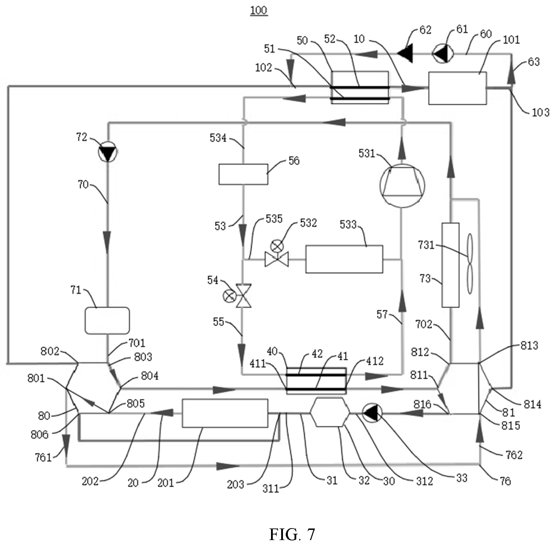

As shown in FIG. 7, the communication branch 76 is selectively in communication with the heat dissipation branch 70 and the second heat exchange branch 20 to guide the heat exchange medium to the heat dissipation branch 70. As some optional embodiments of this application, the communication branch 76 may be connected in series between the heat dissipation branch 70 and the second heat exchange branch 20, that is, the communication branch 76, the heat dissipation branch 70, and the second heat exchange branch 20 are connected in series in sequence. Valves may be provided between the communication branch 76 and the heat dissipation branch 70, between the heat dissipation branch 70 and the second heat exchange branch 20, and between the second heat exchange branch 20 and the communication branch 76, where the valves may be but are not limited to electromagnetic ball valves, electromagnetic butterfly valves, and the like. Controlling operation states of the valves allows the communication branch 76 to be selectively in communication with the heat dissipation branch 70 and the second heat exchange branch 20.

As some optional embodiments of this application, as shown in FIG. 7, the thermal management system 100 may have a first six-way valve 80. The first six-way valve 80 may have a first connection end 801, a second connection end 802, a third connection end 803, a fourth connection end 804, a fifth connection end 805, and a sixth connection end 806. The thermal management system 100 may have a second six-way valve 81. The second six-way valve 81 may have a seventh connection end 811, an eighth connection end 812, a ninth connection end 813, a tenth connection end 814, an eleventh connection end 815, and a twelfth connection end 816.

The ninth end 701 of the heat dissipation branch 70 may be in communication with the third connection end 803. The first end 411 of the first flow sub-passage 41 of the first heat exchanger 40 may be in communication with the fourth connection end 804. The second end 412 of the first flow sub-passage 41 of the first heat exchanger 40 may be in communication with the seventh connection end 811. The sixth end 312 of the heating flow path 31 may be in communication with the twelfth connection end 816. The fifth end 311 of the heating flow path 31 may be in communication with the fourth end 203 of the second heat exchange branch 20. The third end 202 of the second heat exchange branch 20 may be in communication with the fifth connection end 805. The eleventh end 761 of the communication branch 76 may be in communication with the first connection end 801. The twelfth end 762 of the communication branch 76 may be in communication with the eleventh connection end 815 and be in communication with the heat dissipation branch 70 through the ninth connection end 813.

Controlling operation states of the first six-way valve 80 and the second six-way valve 81 allows the communication branch 76 to be selectively in communication with the heat dissipation branch 70 and the second heat exchange branch 20. The communication branch 76 is selectively in communication with the heat dissipation branch 70 and the second heat exchange branch 20 to guide the heat exchange medium to the heat dissipation branch 70, so that the residual heat of the electric drive system 71 and the battery 201 can be absorbed by the first heat exchanger 40. In addition, through the first circulation loop 55, the residual heat absorbed by the first heat exchanger 40 can be transferred to the passenger compartment through the second heat exchanger 50 to heat the passenger compartment using the residual heat of the electric drive system 71 and the battery 201. Moreover, if the residual heat of the electric drive system 71 and the battery 201 is insufficient to meet the heat demand of the passenger compartment, the heating element 32 can operate to supplement the heat.

In the above technical solution, as shown in FIG. 3 and FIG. 4, the communication branch 76 is selectively in communication with the heat dissipation branch 70 to form the third circulation flow path 77, so that heat dissipation can be performed on the electric drive system 71. In addition, the electric drive system 71 and the first heat exchanger 40 may be not located in a same loop, thereby allowing the first heat exchanger 40 to form a loop with the heating assembly 30, and helping to improve the reliability of the thermal management system 100.

As shown in FIG. 7, the communication branch 76 is selectively in communication with the heat dissipation branch 70 and the second heat exchange branch 20 to guide the heat exchange medium to the heat dissipation branch 70, so that the residual heat of the electric drive system 71 and the battery 201 can be absorbed by the first heat exchanger 40. In addition, through the first circulation loop 55, the residual heat absorbed by the first heat exchanger 40 can be transferred to the passenger compartment through the second heat exchanger 50 to heat the passenger compartment using the residual heat of the electric drive system 71 and the battery 201. Moreover, if the residual heat of the electric drive system 71 and the battery 201 is insufficient to meet the heat demand of the passenger compartment, the heating element 32 can operate to supplement the heat. This can achieve a plurality of operation modes of the thermal management system 100, thereby helping to improve the operation performance of the thermal management system 100.

According to some embodiments of this application, as shown in FIG. 1 to FIG. 7, the heat dissipation branch 70 has a second pump 72 and a radiator 73 connected in series. The communication branch 76 is connected in parallel with the radiator 73.

The radiator 73, the second pump 72, and the electric drive system 71 may be connected in series. The second pump 72 can be configured to drive the heat exchange medium in the heat dissipation branch 70. The communication branch 76 is connected in parallel with the radiator 73. Specifically, the eleventh end 761 of the communication branch 76 may be connected to the first connection end 801 of the first six-way valve 80. The twelfth end 762 of the communication branch 76 may be in communication with the eleventh connection end 815 and be connected between the radiator 73 and the second pump 72 through the ninth connection end 813.

As some optional embodiments of this application, as shown in FIG. 1 to FIG. 7, a fan 731 may be disposed near the radiator 73 to supply air to the radiator 73.

As some optional embodiments of this application, as shown in FIG. 1 to FIG. 7, the heating element 32 may be connected in series with the third pump 33.

In the above technical solution, the communication branch 76 is connected in parallel with the radiator 73, so that in some operation modes of the thermal management system 100, the radiator 73 does not participate in an operation loop (for example, in an operation mode that needs to utilize residual heat), thereby fully utilizing the residual heat of some components (for example, the residual heat of the battery 201 and the electric drive system 71), helping to improve the use reliability of the thermal management system 100 and saving the energy.

According to some embodiments of this application, this application further provides a vehicle, where the vehicle includes the above thermal management system 100, and the thermal management system 100 is configured to perform thermal management for the vehicle.

According to some embodiments of this application, referring to FIG. 1 to FIG. 7, this application provides a thermal management system 100 for a vehicle. The thermal management system 100 for a vehicle includes a first heat exchange branch 10 configured to regulate a temperature of a passenger compartment, a second heat exchange branch 20 configured to exchange heat with a battery 201, a heating assembly 30, a first heat exchanger 40, a second heat exchanger 50, a compressor 531, a first expansion valve 532, an evaporator 533, a second expansion valve 54, a third heat exchange branch 60, a heat dissipation branch 70 configured to exchange heat with an electric drive system 71, a communication branch 76, a first six-way valve 80, and a second six-way valve 81.

The first six-way valve 80 may have a first connection end 801, a second connection end 802, a third connection end 803, a fourth connection end 804, a fifth connection end 805, and a sixth connection end 806. The second six-way valve 81 may have a seventh connection end 811, an eighth connection end 812, a ninth connection end 813, a tenth connection end 814, an eleventh connection end 815, and a twelfth connection end 816.

The first heat exchange branch 10 may have a seventh end 102 and an eighth end 103 in communication with each other. The second heat exchange branch 20 may have a third end 202 and a fourth end 203 in communication with each other. A heating flow path 31 may have a fifth end 311 and a sixth end 312 in communication with each other.

The seventh end 102 of the first heat exchange branch 10 may be in communication with the second connection end 802. The eighth end 103 of the first heat exchange branch 10 may be in communication with the tenth connection end 814. The third end 202 of the second heat exchange branch 20 may be in communication with the fifth connection end 805. The fourth end 203 of the second heat exchange branch 20 may be in communication with the fifth end 311 of the heating flow path 31. The fifth end 311 of the heating flow path 31 may be in communication with the sixth connection end 806. The fifth end 311 of the heating flow path 31 may be in communication with the fourth end 203 of the second heat exchange branch 20. The sixth end 312 of the heating flow path 31 may be in communication with the twelfth connection end 816.

The first heat exchanger 40 has a first flow sub-passage 41. Two ends of the first flow sub-passage 41 are a first end 411 and a second end 412 in communication with each other, respectively. The first end 411 of the first flow sub-passage 41 of the first heat exchanger 40 may be in communication with the fourth connection end 804. The second end 412 of the first flow sub-passage 41 of the first heat exchanger 40 may be in communication with the seventh connection end 811.

The heat dissipation branch 70 may have a ninth end 701 and a tenth end 702 in communication with each other. The electric drive system 71 may be provided on the heat dissipation branch 70. The ninth end 701 of the heat dissipation branch 70 may be in communication with the third connection end 803. The tenth end 702 of the heat dissipation branch 70 may be in communication with the eighth connection end 812.

The communication branch 76 may have an eleventh end 761 and a twelfth end 762 in communication with each other. The eleventh end 761 of the communication branch 76 may be in communication with the first connection end 801. The twelfth end 762 of the communication branch 76 may be in communication with the eleventh connection end 815 and be in communication with the heat dissipation branch 70 through the ninth connection end 813. The twelfth end 762 of the communication branch 76 may be in communication with the eleventh connection end 815 and be connected between the radiator 73 and the second pump 72 through the ninth connection end 813.

The first heat exchanger 40 may have a second flow sub-passage 42. The second flow sub-passage 42 is arranged in parallel with the first flow sub-passage 41, that is, the second flow sub-passage 42 is not in communication with the first flow sub-passage 41. The second heat exchanger 50 may have a third flow sub-passage 51. The second flow sub-passage 42 and the third flow sub-passage 51 may be selectively in communication with each other. In addition, the second heat exchanger 50 may have a fourth flow sub-passage 52. The fourth flow sub-passage 52 is arranged in parallel with the third flow sub-passage 51, that is, the fourth flow sub-passage 52 is not in communication with the third flow sub-passage 51. The fourth flow sub-passage 52 of the second heat exchanger 50 is in communication with the first heat exchange branch 10.

The compressor 531, the second heat exchanger 50, the first expansion valve 532, and the evaporator 533 are connected in series to form a refrigeration flow path 53. The second expansion valve 54 is connected in series between the second heat exchanger 50 and the first heat exchanger 40; and the second expansion valve 54 is connected in parallel with the first expansion valve 532. That is, two ends of the second expansion valve 54 may be in communication with the second heat exchanger 50 and the first heat exchanger 40, respectively; and the second expansion valve 54 may be connected in parallel with the first expansion valve 532. The thermal management system 100 may further include a first sub-branch 57. The second flow sub-passage 42 of the first heat exchanger 40 and the second expansion valve 54 may both be located in the first sub-branch 57. The refrigeration flow path 53 may include a second sub-branch 534 and a third sub-branch 535. The second sub-branch 534 is connected in series with the third sub-branch 535. The compressor 531 and the third flow sub-passage 51 of the second heat exchanger 50 may be located in the second sub-branch 534. The first expansion valve 532 and the evaporator 533 may be located in the third sub-branch 535. The first sub-branch 57 is connected in parallel with the third sub-branch 535. It can be understood that the compressor 531, the third flow sub-passage 51 of the second heat exchanger 50, the first expansion valve 532, and the evaporator 533 are connected in series to form a refrigeration flow path 53. The compressor 531, the third flow sub-passage 51 of the second heat exchanger 50, the second expansion valve 54, and the second flow sub-passage 42 of the first heat exchanger 40 are connected in series to form a first circulation loop 55. Controlling operation states of the first expansion valve 532 and the second expansion valve 54 allows at least one of the refrigeration flow path 53 and the first circulation loop 55 to be switched on for operation.

The liquid storage apparatus 56 is connected in series between the first expansion valve 532 and the second heat exchanger 50. The second heat exchanger 50 is configured as a part of the first heat exchange branch 10. The third heat exchange branch 60 is connected in parallel with the first heat exchange branch 10. The third heat exchange branch 60 has a first pump 61 and a one-way valve 62 connected in series. The heat dissipation branch 70 has a second pump 72 and a radiator 73 connected in series, that is, the radiator 73, the second pump 72, and the electric drive system 71 may be connected in series.

Seven operation modes of the thermal management system 100 of this application are described below, but operation modes of the thermal management system 100 of this application are not limited to the following seven operation modes.

In a first operation mode, as shown in FIG. 1, the heating flow path 31, the first heat exchange branch 10, and the third pump 33 are connected in series to form a loop to achieve a heating mode of directly heating the passenger compartment through the heating element 32. Specifically, under the action of the third pump 33, the heat exchange medium can pass through the heating element 32, and the heating element 32 can heat the heat exchange medium flowing through it. The heated heat exchange medium flowing out from the heating element 32 sequentially passes through the sixth connection end 806 of the first six-way valve 80, the second connection end 802 of the first six-way valve 80, the fourth flow sub-passage 52 of the second heat exchanger 50, the heat exchange core 101, the tenth connection end 814 of the second six-way valve 81, and the twelfth connection end 816 of the second six-way valve 81, and then flows back to the heating element 32. Thus, the heater 32 can directly supply heat to the heat exchange core 101, thereby allowing the heater 32 to directly heat the air to the passenger compartment through the heat exchange core 101.

In addition, in the first operation mode, the second pump 72 of the heat dissipation branch 70, the electric drive system 71, the first flow sub-passage 41 of the first heat exchanger 40, and the radiator 73 may be connected in series to form a loop. Under the action of the second pump 72, the heat exchange medium can sequentially pass through the electric drive system 71, the first flow sub-passage 41 of the first heat exchanger 40, and the radiator 73, and then flow back to the second pump 72 to regulate the temperature of the electric drive system 71. It should be noted that in the first operation mode, the loop involving the electric drive system 71 can be switched on or off.

In a second operation mode, as shown in FIG. 2, the third pump 33, the heating flow path 31, and the second heat exchange branch 20 are connected in series to form a loop to achieve a heating mode of directly heating the battery 201 through the heating element 32. Specifically, under the action of the third pump 33, the heat exchange medium can pass through the heating element 32, and the heating element 32 can heat the heat exchange medium flowing through it. The heated heat exchange medium flowing out from the heating element 32 sequentially passes through the second heat exchange branch 20, the fifth connection end 805 of the first six-way valve 80, the first connection end 801 of the first six-way valve 80, the eleventh connection end 815 of the second six-way valve 81, and the twelfth connection end 816 of the second six-way valve 81, and then flows back to the heating element 32.

In addition, the second pump 72 of the heat dissipation branch 70, the electric drive system 71, the first flow sub-passage 41 of the first heat exchanger 40, and the radiator 73 may be connected in series to form a loop, and the first heat exchanger 40 absorbs the residual heat of the electric drive system 71 and the environment. Specifically, under the action of the second pump 72, the heat exchange medium can sequentially pass through the electric drive system 71, the first flow sub-passage 41 of the first heat exchanger 40, and the radiator 73, and then flow back to the second pump 72.

The compressor 531, the third flow sub-passage 51 of the second heat exchanger 50, the second expansion valve 54, and the second flow sub-passage 42 of the first heat exchanger 40 are connected in series to form the first circulation loop 55 to transfer the residual heat of the electric drive system 71 and the environment absorbed by the first heat exchanger 40 to the first heat exchange branch 10 so as to heat the passenger compartment using the residual heat of the electric drive system 71 and the environment. Specifically, the refrigerant flows out from the compressor 531 and sequentially flows through the third flow sub-passage 51 of the second heat exchanger 50, the second expansion valve 54, and the second flow sub-passage 42 of the first heat exchanger 40, and then flows back to the compressor 531.

In addition, the third heat exchange branch 60 and the first heat exchange branch 10 jointly form the second circulation loop 63 to achieve continuous and uninterrupted heating of the passenger compartment. Specifically, under the action of the first pump 61, the heat exchange medium sequentially flows through the fourth flow sub-passage 52 of the second heat exchanger 50 and the heat exchange core 101, and then flows back to the first pump 61.

In addition, it should be noted that in this operation mode, the refrigeration flow path 53 may operate or may not operate.

In a third operation mode, as shown in FIG. 3, the heating flow path 31 and the first flow sub-passage 41 of the first heat exchanger 40 are connected in series to form a loop, and the first heat exchanger 40 absorbs the heat of the heat exchange medium heated by the heating element 32. Specifically, under the action of the third pump 33, the heat exchange medium can pass through the heating element 32, and the heating element 32 can heat the heat exchange medium flowing through it. The heated heat exchange medium flowing out from the heating element 32 sequentially passes through the sixth connection end 806 of the first six-way valve 80, the fourth connection end 804 of the first six-way valve 80, the first flow sub-passage 41 of the first heat exchanger 40, the seventh connection end 811 of the second six-way valve 81, and the twelfth connection end 816 of the second six-way valve 81, and then flows back to the heating element 32.

The compressor 531, the third flow sub-passage 51 of the second heat exchanger 50, the second expansion valve 54, and the second flow sub-passage 42 of the first heat exchanger 40 are connected in series to form the first circulation loop 55 to transfer the heat absorbed by the first heat exchanger 40 to the first heat exchange branch 10 so as to heat the passenger compartment using the heat of the heating element 32, thereby achieving rapid temperature rise of the passenger compartment in a low-temperature environment. Specifically, the refrigerant flows out from the compressor 531 and sequentially flows through the third flow sub-passage 51 of the second heat exchanger 50, the second expansion valve 54, and the second flow sub-passage 42 of the first heat exchanger 40, and then flows back to the compressor 531.

In addition, the third heat exchange branch 60 and the first heat exchange branch 10 jointly form the second circulation loop 63 to achieve continuous and uninterrupted heating of the passenger compartment. Specifically, under the action of the first pump 61, the heat exchange medium sequentially flows through the fourth flow sub-passage 52 of the second heat exchanger 50 and the heat exchange core 101, and then flows back to the first pump 61.

In addition, the second pump 72 of the heat dissipation branch 70, the electric drive system 71, and the communication branch 76 are connected in series to form a loop to regulate the temperature of the electric drive system 71. Specifically, under the action of the second pump 72, the heat exchange medium can sequentially pass through the electric drive system 71, the third connection end 803 of the first six-way valve 80, the first connection end 801 of the first six-way valve 80, the communication branch 76, the eleventh connection end 815 of the second six-way valve 81, and the ninth connection end 813 of the second six-way valve 81, and then flow back to the second pump 72.

In addition, it should be noted that in this operation mode, the refrigeration flow path 53 may operate or may not operate.

In a fourth operation mode, as shown in FIG. 4, the heating flow path 31 and the first flow sub-passage 41 of the first heat exchanger 40 are connected in series to form a loop; and the heating flow path 31, the second heat exchange branch 20, and the first flow sub-passage 41 of the first heat exchanger 40 are connected in series to form a loop, so that the battery 201 is directly heated by the heating element 32, and the first heat exchanger 40 absorbs the heat of the heat exchange medium heated by the heating element 32. Specifically, under the action of the third pump 33, the heat exchange medium can pass through the heating element 32, and the heating element 32 can heat the heat exchange medium flowing through it.

A part of the heated heat exchange medium flowing out from the heating element 32 sequentially passes through the sixth connection end 806 of the first six-way valve 80, the fourth connection end 804 of the first six-way valve 80, the first flow sub-passage 41 of the first heat exchanger 40, the seventh connection end 811 of the second six-way valve 81, and the twelfth connection end 816 of the second six-way valve 81, and then flows back to the heating element 32.

Another part of the heated heat exchange medium flowing out from the heating element 32 sequentially passes through the second heat exchange branch 20, the fifth connection end 805 of the first six-way valve 80, the fourth connection end 804 of the first six-way valve 80, the first flow sub-passage 41 of the first heat exchanger 40, the seventh connection end 811 of the second six-way valve 81, and the twelfth connection end 816 of the second six-way valve 81, and then flows back to the heating element 32.

The compressor 531, the third flow sub-passage 51 of the second heat exchanger 50, the second expansion valve 54, and the second flow sub-passage 42 of the first heat exchanger 40 are connected in series to form the first circulation loop 55 to transfer the heat absorbed by the first heat exchanger 40 to the first heat exchange branch 10 so as to heat the passenger compartment using the heat of the heating element 32, thereby achieving rapid temperature rise of the battery 201 and the passenger compartment in a low-temperature environment. Specifically, the refrigerant flows out from the compressor 531 and sequentially flows through the third flow sub-passage 51 of the second heat exchanger 50, the second expansion valve 54, and the second flow sub-passage 42 of the first heat exchanger 40, and then flows back to the compressor 531.

In addition, the third heat exchange branch 60 and the first heat exchange branch 10 jointly form the second circulation loop 63 to achieve continuous and uninterrupted heating of the passenger compartment. Specifically, under the action of the first pump 61, the heat exchange medium sequentially flows through the fourth flow sub-passage 52 of the second heat exchanger 50 and the heat exchange core 101, and then flows back to the first pump 61.

In addition, the second pump 72 of the heat dissipation branch 70, the electric drive system 71, and the communication branch 76 are connected in series to form a loop to regulate the temperature of the electric drive system 71. Specifically, under the action of the second pump 72, the heat exchange medium can sequentially pass through the electric drive system 71, the third connection end 803 of the first six-way valve 80, the first connection end 801 of the first six-way valve 80, the communication branch 76, the eleventh connection end 815 of the second six-way valve 81, and the ninth connection end 813 of the second six-way valve 81, and then flow back to the second pump 72.

In addition, it should be noted that in this operation mode, the refrigeration flow path 53 may operate or may not operate. Moreover, when the refrigeration flow path 53 and the first circulation loop 55 operate simultaneously, the air can first flow through the evaporator 533 to be preheated, and then flow through the heat exchange core 101 to be heated again.

In a fifth operation mode, as shown in FIG. 5, the radiator 73 of the heat dissipation branch 70, the second pump 72, the electric drive system 71, the first flow sub-passage 41 of the first heat exchanger 40, the heating assembly 30, the second heat exchange branch 20, and the first heat exchange branch 10 are connected in series to form a loop. Specifically, under the action of the second pump 72, the heat exchange medium can sequentially pass through the electric drive system 71, the first flow sub-passage 41 of the first heat exchanger 40, the seventh connection end 811 of the second six-way valve 81, the twelfth connection end 816 of the second six-way valve 81, the heating assembly 30, the second heat exchange branch 20, the fifth connection end 805 of the first six-way valve 80, the second connection end 802 of the first six-way valve 80, the fourth flow sub-passage 52 of the second heat exchanger 50, the heat exchange core 101, the tenth connection end 814 of the second six-way valve 81, the eighth connection end 812 of the second six-way valve 81, and the radiator 73, and then flow back to the second pump 72.

The compressor 531, the third flow sub-passage 51 of the second heat exchanger 50, the first expansion valve 532, and the evaporator 533 are connected in series to form the refrigeration flow path 53, and the refrigeration flow path 53 can operate and absorb heat from the passenger compartment to achieve cooling of the passenger compartment. Specifically, the refrigerant flows out from the compressor 531 and sequentially flows through the third flow sub-passage 51 of the second heat exchanger 50, the first expansion valve 532, and the evaporator 533, and then flows back to the compressor 531. In addition, when the refrigeration flow path 53 operates and absorbs heat from the passenger compartment, the heat exchange medium in the fourth flow sub-passage 52 of the second heat exchanger 50 can absorb the heat from the passenger compartment absorbed by the refrigeration flow path 53, and enter the battery 201 through the second six-way valve 81, the heat dissipation branch 70, the first heat exchanger 40, and the like, to heat the battery 201 through the residual heat of the passenger compartment, thereby achieving a mode of cooling the passenger compartment and heating the battery 201.

In a sixth operation mode, as shown in FIG. 6, the compressor 531, the third flow sub-passage 51 of the second heat exchanger 50, the first expansion valve 532, and the evaporator 533 are connected in series to form the refrigeration flow path 53, and the refrigeration flow path 53 can operate and absorb heat from the passenger compartment. Specifically, the refrigerant flows out from the compressor 531 and sequentially flows through the third flow sub-passage 51 of the second heat exchanger 50, the first expansion valve 532, and the evaporator 533, and then flows back to the compressor 531.

The radiator 73 of the heat dissipation branch 70, the second pump 72, the electric drive system 71, and the first heat exchange branch 10 are connected in series to form the second circulation flow path 75. Specifically, under the action of the second pump 72, the heat exchange medium can sequentially pass through the electric drive system 71, the fourth flow sub-passage 52 of the second heat exchanger 50, the heat exchange core 101, the tenth connection end 814 of the second six-way valve 81, the eighth connection end 812 of the second six-way valve 81, and the radiator 73, and then flow back to the second pump 72.

The compressor 531, the third flow sub-passage 51 of the second heat exchanger 50, the second expansion valve 54, and the second flow sub-passage 42 of the first heat exchanger 40 are connected in series to form the first circulation loop 55. Specifically, the refrigerant flows out from the compressor 531 and sequentially flows through the third flow sub-passage 51 of the second heat exchanger 50, the second expansion valve 54, and the second flow sub-passage 42 of the first heat exchanger 40, and then flows back to the compressor 531.

The first flow sub-passage 41 of the first heat exchanger 40, the second heat exchange branch 20, and the heating assembly 30 are connected in series to form a loop to transfer the heat of the battery 201 to the first heat exchanger 40. Specifically, under the action of the third pump 33, the heat exchange medium can sequentially pass through the heating flow path 31, the second heat exchange branch 20, the fifth connection end 805 of the first six-way valve 80, the fourth connection end 804 of the first six-way valve 80, the first flow sub-passage 41 of the first heat exchanger 40, the seventh connection end 811 of the second six-way valve 81, and the twelfth connection end 816 of the second six-way valve 81, and then flow back to the third pump 33.

The first circulation loop 55 operates and absorbs the heat of the battery 201 through the first heat exchanger 40, the heat exchange medium in the second circulation flow path 75 can absorb the heat absorbed by the refrigeration flow path 53 and the first circulation loop 55 through the second heat exchanger 50, and the electric drive system 71 is heated by the heat or the heat is dissipated to the environment through the radiator 73 of the heat dissipation branch 70, thereby achieving an operation mode of cooling the passenger compartment and cooling the battery 201.

In a seventh operation mode, as shown in FIG. 7, the second pump 72 of the heat dissipation branch 70, the electric drive system 71, the first flow sub-passage 41 of the first heat exchanger 40, the heating assembly 30, and the second heat exchange branch 20 are connected in series to form a loop. Specifically, under the action of the second pump 72, the heat exchange medium can sequentially pass through the electric drive system 71, the first flow sub-passage 41 of the first heat exchanger 40, the seventh connection end 811 of the second six-way valve 81, the twelfth connection end 816 of the second six-way valve 81, the heating assembly 30, the second heat exchange branch 20, the fifth connection end 805 of the first six-way valve 80, the first connection end 801 of the first six-way valve 80, the communication branch 76, the eleventh connection end 815 of the second six-way valve 81, and the ninth connection end 813 of the second six-way valve 81, and then flow back to the second pump 72.

The compressor 531, the third flow sub-passage 51 of the second heat exchanger 50, the second expansion valve 54, and the second flow sub-passage 42 of the first heat exchanger 40 are connected in series to form the first circulation loop 55. Specifically, the refrigerant flows out from the compressor 531 and sequentially flows through the third flow sub-passage 51 of the second heat exchanger 50, the second expansion valve 54, and the second flow sub-passage 42 of the first heat exchanger 40, and then flows back to the compressor 531.

In this way, the residual heat of the electric drive system 71 and the battery 201 can be absorbed by the first heat exchanger 40, and the absorbed residual heat can be used for heating the passenger compartment through the second heat exchanger 50 on the first circulation loop 55 to heat the passenger compartment using the residual heat of the electric drive system 71 and the battery 201. Moreover, if the residual heat of the electric drive system 71 and the battery 201 is insufficient to meet the heat demand of the passenger compartment, the heating element 32 of the heating assembly 30 can operate to supplement the heat. In addition, the third heat exchange branch 60 and the first heat exchange branch 10 jointly form the second circulation loop 63 to achieve continuous and uninterrupted heating of the passenger compartment. Specifically, under the action of the first pump 61, the heat exchange medium sequentially flows through the fourth flow sub-passage 52 of the second heat exchanger 50 and the heat exchange core 101, and then flows back to the first pump 61.

Through the thermal management system 100 of this application, the heating flow path 31 may be in communication with the first heat exchange branch 10 and/or the second heat exchange branch 20, thereby allowing the heating element 32 to be directly configured to regulate the temperature of the passenger compartment and/or regulate the temperature of the battery 201. Compared with the prior art, this helps to reduce the power of the heating element 32 to reduce the costs of components of the thermal management system 100. In addition, an operation mode of the thermal management system 100 does not need to be adjusted frequently, so that fluctuations in the air outlet temperature of an air conditioner can be reduced, thereby helping to improve the comfort of the passenger compartment. Moreover, the control difficulty of the thermal management system 100 can be reduced, thereby helping to improve the robustness of the thermal management system 100.

In the description of this specification, descriptions referring to the terms "an embodiment", "some embodiments", "exemplary embodiments", "an example", "a specific example", or "some examples" mean the specific features, structures, materials, or characteristics described in connection with the embodiment or example are included in at least one embodiment or example of this application. In this specification, illustrative expressions of these terms do not necessarily refer to the same embodiment or example. Moreover, the specific features, structures, materials, or characteristics described may be combined in any suitable manner in any one or more embodiments or examples.

Although the embodiments of this application have been shown and described, those of ordinary skill in the art can understand that: various changes, modifications, substitutions, and variations can be made to these embodiments without departing from the principle and essence of this application, and the scope of this application is defined by the claims and their equivalents.

## Claims

1. A thermal management system for a vehicle, **characterized by** comprising:
a first heat exchange branch configured to regulate a temperature of a passenger compartment;
a second heat exchange branch configured to exchange heat with a battery; and
a heating assembly, wherein the heating assembly comprises a heating flow path and a heating element configured to heat the heating flow path, and the heating flow path is selectively in communication with at least one of the first heat exchange branch and the second heat exchange branch to guide a heated heat exchange medium to the first heat exchange branch and/or the second heat exchange branch.

2. The thermal management system for a vehicle according to claim 1, **characterized in that** one end of the first heat exchange branch is selectively in communication with at least one of one end of the second heat exchange branch and one end of the heating flow path; and
the other end of the second heat exchange branch is in communication with the other end of the heating flow path, and the other end of the first heat exchange branch is selectively in communication with the other end of the heating flow path.

3. The thermal management system for a vehicle according to claim 1 or 2, **characterized by** further comprising: a first heat exchanger, wherein the first heat exchanger is selectively in communication with at least one of the heating flow path and the second heat exchange branch to guide the heated heat exchange medium to the first heat exchanger, and the first heat exchanger is adapted to transfer heat to the first heat exchange branch.

4. The thermal management system for a vehicle according to claim 3, **characterized in that** the first heat exchanger has a first end and a second end in communication with each other, wherein the first end is selectively in communication with at least one of one end of the second heat exchange branch and one end of the heating flow path; and the second end is selectively in communication with the other end of the heating flow path.

5. The thermal management system for a vehicle according to claim 3 or 4, **characterized by** further comprising: a second heat exchanger, wherein the second heat exchanger is adapted to perform heat transfer with the first heat exchanger, and the second heat exchanger is in communication with the first heat exchange branch.

6. The thermal management system for a vehicle according to claim 5, **characterized by** further comprising: a compressor, a first expansion valve, and an evaporator, wherein the compressor, the second heat exchanger, the first expansion valve, and the evaporator are connected in series to form a refrigeration flow path.

7. The thermal management system for a vehicle according to claim 6, **characterized by** further comprising: a second expansion valve, wherein the second expansion valve is connected in series between the second heat exchanger and the first heat exchanger, and the second expansion valve is connected in parallel with the first expansion valve.

8. The thermal management system for a vehicle according to any one of claims 5 to 7, **characterized in that** the second heat exchanger is configured as a part of the first heat exchange branch.

9. The thermal management system for a vehicle according to any one of claims 1 to 8, **characterized by** further comprising: a third heat exchange branch, wherein the third heat exchange branch is connected to the first heat exchange branch, and the third heat exchange branch has a first pump and a one-way valve connected in series.

10. The thermal management system for a vehicle according to any one of claims 3 to 8, **characterized by** further comprising: a heat dissipation branch configured to exchange heat with an electric drive system, wherein
the heat dissipation branch is selectively in communication with the first heat exchanger to form a first circulation flow path; and/or
the heat dissipation branch is selectively in communication with the first heat exchange branch and the first heat exchanger to guide the heat exchange medium to the first heat exchanger; and/or
the heat dissipation branch is selectively in communication with the first heat exchange branch to form a second circulation flow path.

11. The thermal management system for a vehicle according to claim 10, **characterized by** further comprising: a communication branch, wherein the communication branch is selectively in communication with the heat dissipation branch to form a third circulation flow path; and/or
the communication branch is selectively in communication with the heat dissipation branch and the second heat exchange branch to guide the heat exchange medium to the heat dissipation branch.

12. The thermal management system for a vehicle according to claim 11, **characterized in that** the heat dissipation branch has a second pump and a radiator connected in series, and the communication branch is connected in parallel with the radiator.

13. A vehicle, **characterized by** comprising the thermal management system for a vehicle according to any one of claims 1 to 12.
